# EUROPÄISCHE PATENTSCHRIFT

(11) **EP 1 796 346 B1**
(45) Veröffentlichungstag und Bekanntmachung des Hinweises auf die Patenterteilung: **29.02.2012**
(21) Anmeldenummer: 06021108.3
(22) Anmeldetag: 07.10.2006
(51) Int. Cl.: H04L 29/08

(54) **Intelligentes Loadmanagement**
Intelligent load management
Gestion de charge intelligente

(30) Priorität: 08.12.2005 DE 102005058575
(43) Veröffentlichungstag der Anmeldung: 13.06.2007
(73) Patentinhaber: Deutsche Telekom AG, 53113 Bonn (DE)
(72) Erfinder: Witt, Hauke, 24211 Wahlstorf (DE)

(56) Entgegenhaltungen:
- US-A1- 2001 027 491
- US-A1- 2002 143 798
- US-A1- 2004 221 019
- US-A1- 2005 193 113

## Beschreibung

Die vorliegende Erfindung betrifft ein Verfahren zur Auslieferung ("Delivery") von digital kodierten Inhalten ("Content"), beispielsweise von Texten, Bildern, Musikstücken, Videoclips, Computerspielen oder ähnlichem, über das Internet, wobei Kopien des Content auf zentral über das Internet zugänglichen Computern ("Edge Devices") abgelegt werden und wobei ein Nutzer zum Abruf des Content über ein ebenfalls an das Internet angeschlossenes Endgerät auf ein Edge Device zugreift.

Bekanntermaßen ist es über ein solches mit dem Internet verbundenes Endgerät, beispielsweise einen PC, das mit einer geeigneten Software ("Client") ausgestattet ist, möglich, Content von einem Server herunter zu laden uns diesen auf dem Endgerät zu speichern und auszugeben. Dabei wird von einem "Download" gesprochen, wenn der Content vor der Ausgabe zunächst vollständig herunter geladen und gespeichert wird. Im Gegensatz dazu wird für Audio- und/oder Video-Content zunehmend das so genannte " Streaming " verwendet, wobei der Content simultan übertragen und mit minimalem Zeitversatz dargestellt wird. Bei dem Streaming muss die Übertragung zum Endgerät in der gleichen Geschwindigkeit stattfinden, mit der der Content wiedergegeben wird. Wenn es sich beim Content um eine "Konserve" aus einer Datei handelt, die immer wieder identisch abgerufen werden kann, wird das als "On-Demand-Streaming" bezeichnet. Wird der Content aber kontinuierlich dynamisch, zum Beispiel im Rahmen eines Radio- Programms, erzeugt, ist das ein "Live-Streaming". Für die Übertragung des Content benutzen Client und Server ein den beiden Geräten bekanntes Transport-Protokoll, beispielsweise "http", wobei für das Streaming oft "rtsp" oder "mms" verwendet wird.

Ein Content wird über seine URL (Uniform Ressource Locator) eindeutig identifiziert. Die URL enthält das zu verwendende Protokoll, den Namen ("Hostname") oder die IP Adresse des Servers sowie einen Pfadnamen. Nach der Eingabe der URL baut der Client eine IP Verbindung zu dem adressierten Server auf, um unter Verwendung des angegebenen Protokolls und unter Angabe des Pfadnamens eine Anfrage ("Request") an den Server zu stellen, der dann mit der Übertragung des Content beginnt.

Die Anzahl der Übertragungen, die ein Server gleichzeitig bedienen kann, ist jedoch begrenzt. Durch die zunehmende Verbreitung von DSL, die zunehmende Größe der Download- Contents sowie die zunehmende Beliebtheit des Streaming sind diese Grenzen schnell erreicht. Dies gilt insbesondere, wenn ein Content aktuell sehr viele Zugriffe auf sich zieht.

Diesem Problem wird durch sogenannte "Content Delivery Networks" (CDN) begegnet. Diese CDN weisen mehrere über das Internet verteilte Server auf, die untereinander in Verbindung stehen und zentral organisiert werden. Im Prinzip kann jeder dieser Server den Content liefern. Die Architektur folgt dem Modell eines "Overlay Networks", also eines über das Internet gelegten eigenen Netzes. Die Grenzen oder Kanten ("Edges") dieses Netzes sind die Server, von denen die Clients den Content bekommen.

Dabei kommen auch spezielle Server, sogenannte "Caches", zum Einsatz, die einen Content, den sie aktuell nicht selber gespeichert haben, bei Bedarf von einem anderen Server abrufen. Dem anderen Server gegenüber verhalten sich die Caches wie ein Client. Die Caches leiten den Content simultan an ihre Clients weiter und speichern ihn für zukünftige Requests. Wird der Content längere Zeit nicht abgerufen, löschen sie ihn automatisch. Solche Caches sind bei gleicher Leistungsfähigkeit wesentlich teurer als "herkömmliche" Server.

Solch ein System ist aus Patentschrift US 2001/0027491 bekannt.

Im Folgenden wird der Begriff "Server" ausschließlich für Server im klassischen Sinne verwendet, die schon über einen Content verfügen müssen, um ihn liefern zu können. Ansonsten wird verallgemeinernd von "Edge Devices" die Rede sein.

Ein wesentliches Merkmal der CDN ist die Art der Zugriffsverteilung. Damit der Nutzer nicht mit vielen verschiedenen URLs für denselben auf mehrere Edge Devices verteilten Content konfrontiert ist, wird einem Content jeweils eine einzige URL zugeordnet, wobei das CDN dann durch geeignete Maßnahmen dafür sorgt, dass ein Request auf die URL zu einem der entsprechenden Edge Devices geleitet wird. Für diese Organisation stehen nachfolgende Mechanismen zur Verfügung:

Bei der "dynamic DNS" werden bei der Auflösung des Hostnamen zu einer IP-Adresse, z.B. "www.telekom.de", durch spezielle DNS Server, die alle Bestandteil des CDN sind, verschiedene IP Adressen zurückgeliefert. Zudem werden "Layer 4-7 Switches" oder "Load Balancer" verwendet, die gewissermaßen "intelligente" Ethernet- Switches bilden und eine "virtuelle" Serveradresse jeweils in eine "echte" IP Adresse der an sie direkt angeschlossenen Edge Devices umsetzen und so die Requests verteilen.

Eine weitere Möglichkeit ist die "Redirection". Dabei beantwortet ein spezieller Server ("Redirector"), einen Request nicht mit dem Content, sondern mit einer dynamisch erzeugten URL, an der sich der Client den Content abholen kann. Einige Protokolle (z.B. http, rtsp) sehen diese Möglichkeit unmittelbar vor. Bei anderen Protokollen, die diese Möglichkeit nicht haben (z.B. mms), wird per http zunächst eine kleine, dynamisch erzeugte Datei geliefert (z.B. bei mms ein ASX-File), die vom Client ausgewertet wird und die URL enthält. In der Folge baut der Client eine neue IP Verbindung zu der so erhaltenen Adresse auf.

Viele CDN Systeme verwenden eine Kombination von Dynamic DNS und Layer 4-7 Switches. Ihre Edge Devices sind auf verschiedene Standorte ("Points of Presence", PoP) verteilt, wobei an jedem PoP eine bestimmte Anzahl von Edge Devices über einen Layer 4-7 Switch angeschlossen ist. Der Switch verteilt die Requests entsprechend der aktuellen Betriebsbereitschaft der Edge Devices und der Netzwerkbelastung. Dabei geschieht bei Dynamic DNS eine Vorverteilung auf die PoPs, wobei Auswahlkriterium meist nur die Entfernung im Netz zum Endgerät des Nutzers herangezogen wird. Eine wesentliche Eigenschaft solcher Systeme ist, dass die Information, welcher Content mit einem Request angefordert wird, erst von demjenigen Edge Device ausgewertet wird, das den Request letztendlich bedienen muss. Somit muss jedes Edge Device grundsätzlich jeden Content liefern können. Aus diesem Grund werden in solchen Plattformen nahezu ausschließlich Caches als Edge Devices eingesetzt.

Andere Systeme, wie RealNetworks BMS oder Castify, verwenden die Redirection als Methode zur Zugriffsverteilung. Diese Systeme wurden für Geschäftsmodelle entworfen, bei denen ein CDN Betreiber den Anbietern von Inhalten ("Content Providern") Speicherplatz auf seinen Edge Devices, meist Servern, vermietet. Dabei entscheidet der Content Provider letztendliche aufgrund der Kosten, auf wie viele und teilweise auch auf welche Edge Devices sein Content verteilt wird. Bei dieser Methode kann nicht jedes Edge Device jeden Content liefern. Bei der Zugriffsverteilung wird zuerst ausgewertet, welcher Content mit einem Request angefordert wird. Anschließend werden die oben angeführten drei "klassischen Kriterien" berücksichtigt.

Alle dargestellten CDN Systeme sind nur bedingt geeignet, um große Mengen verschiedenen Contents an eine große Anzahl von Nutzern gleichzeitig zu verteilen. Die erst genannten Systeme scheitern, wenn sehr viel verschiedener Content jeweils von wenigen Nutzern gleichzeitig angefordert wird. Die Systeme mit Redirektor scheitern, wenn mehr Nutzer als erwartet gleichzeitig einen bestimmten Content anfordern, und die Edge Devices, die diesen Content liefern können, an ihre Leistungsgrenzen stoßen. Erfahrungen mit diesen Systemen zeigen, dass Content Provider zwar meistens die Attraktivität ihres Contents deutlich überschätzen, dass es für einzelne Contents aber regelmäßig passiert, dass die Erwartungen deutlich übertroffen werden.

Wie gesagt, ist die Leistungsfähigkeit eines jeden Edge Devices begrenzt. Hinzu kommt der beobachtbare Effekt, dass die Leistungsfähigkeit eines Edge Devices mit der Menge unterschiedlichen Contents, der gleichzeitig geliefert werden muss, abnimmt. Außerdem ist bei einem Server die Gesamtmenge gleichzeitig lieferbaren Contents grundsätzlich durch die Kapazität seiner Festplatten begrenzt. Bei einem Cache existiert diese Grenze bedingt durch seine Fähigkeit, dynamisch Content ein- und auszulagern, nicht in dieser Weise. Übersteigt jedoch die Gesamtgröße des Contents, der regelmäßig innerhalb eines kurzen Zeitraums abgefordert wird, seine Plattenkapazität, muss er ständig Content aus- und einlagern und beginnt zu "flattern". Die Folge ist ein signifikanter Einbruch seiner Leistungsfähigkeit. Dies ist bei dem System aus der US 2004/0221019 der Fall.

Bei den Systemen, die mit einem Redirector arbeiten, wird die Contentverteilung "manuell" festgelegt und ist somit gewissermaßen statisch. Dieses statische Verfahren ist jedoch insofern problematisch, als die Attraktivität, also die Anzahl der Zugriffe, die ein Content in einer gewissen Zeit auf sich zieht, extrem unterschiedlich ist. Die Spanne reicht von wenigen Zugriffen pro Monat bis hin zu permanent mehr als 10.000 gleichzeitigen Zugriffen. Entsprechend unterschiedlich ist damit auch die Anzahl benötigter Edge Devices. Es ist aber eine nahezu unlösbare Aufgabe, die Attraktivität eines bestimmten Contents von vornherein richtig einzuschätzen, insbesondere da sich die Attraktivität durch äußere Umstände schlagartig ändern kann. Bei großen Mengen Content ist eine sinnvolle Verteilung manuell daher nicht möglich.

Aus der US 2004/0221019 A1 ist eine Gruppe von edge devices mit vorbestimmter Speichergröße bekannt, die ihren jeweiligen Inhalt entsprechend der Anzahl der Abrufe anpassen. Ein nicht vorhandener Inhalt wird eingestellt, sobald die Nachfrage nach diesem Inhalt die eines vorhandenen, aber seltener nachgefragten übersteigt.

Das US 2001/0027491 A1 zeigt edge devices, in denen bei verstärkter Nachfrage ein Inhalt innerhalb eines devices von weniger schnell zugänglichen Speicherbereichen auf schneller zugängliche kopiert wird.

Dem US 2005/0193113 A1 ist ein Serververbund zu entnehmen, der bei einer Änderung der Reaktionszeiten Serverkapazitäten mit identischem Inhalt hinzufügt oder entfernt.

Die Aufgabe der vorliegenden Erfindung ist es nunmehr, ein gattungsgemäßes Verfahren zur Verteilung von Content zu schaffen, das sich mit einfachen Mitteln kostengünstig umsetzen lässt, das einer Vielzahl von Nutzern einen komfortablen Zugriff auf den gewünschten Content verschafft und das auch bei großen Mengen an Content flexibel auf eine schwankende Attraktivität reagiert und damit die Leistungsfähigkeit eines CDN optimiert.

Diese Aufgabe wird durch ein Verfahren mit den kennzeichnenden Merkmalen des Anspruch 1 gelöst. Vorteilhafte Ausgestaltungen des Verfahrens sind in den Unteransprüchen genannt.

Der generelle Grundgedanke der Erfindung liegt darin, die Menge an Content, die ein Edge Device gleichzeitig liefern muss, dadurch zu minimieren, dass die Anzahl der Edge Devices, die einen bestimmten Content gleichzeitig liefern können, minimiert bzw. entsprechend der Nachfrage optimiert wird. Das geschieht dadurch, dass die Requests nach dem bestimmten Content sortiert auf die Edge Devices verteilt werden, wobei für diesen speziellen Content gewissermaßen "contentspezifisch" eine Gruppe von Edge Devices, die diesen Content liefern können, insofern dynamisch definiert wird, als die Zahl der zu der Gruppe gehörigen Edge Devices automatisch anhand eines einem jeden Edge Device zugeordneten Kontrollparameters an die Menge der diesen Content abrufenden Anfragen ("Requests") angepasst wird.

Mit dem erfindungsgemäßen Verfahren dieser "adaptiven Contentverteilung" können einerseits Requests nach einem bestimmten Content aktuell, flexibel und damit "intelligent" auf diejenigen Edge Devices verteilt, die momentan gerade die beste Performance dafür bieten. Sobald eine steigende Nachfrage nach diesem Content registriert wird, kopiert das System diesen auf der Grundlage der Kontrollparameter sofort selbsttätig auf weitere Edge Devices, um die Nachfrage komfortabel befriedigen zu können. Um nicht unnötig Content mitzuschleppen, werden entsprechend bei fallender Nachfrage die Kopien wieder entfernt und der Speicherplatz damit gereinigt.

In einem ersten Schritt kann die Definition der Gruppe gewissermaßen manuell erfolgen, indem ein oder mehrere Edge Device, die gerade geeignet scheinen, bestimmt werden. Diese anfängliche Definition kann auch automatisch geschehen, indem anhand vorgegebener Kriterien, beispielsweise der Auslastung, der örtlichen Nähe zum Provider oder der homogenen Abdeckung, Edge Device ausgewählt werden. Innerhalb einer so definierten Gruppe von Edge Devices können die Zugriffe nach den klassischen Kriterien verteilt werden.

Ein erfindungswesentlicher Gedanke liegt in dem Kontrollparameter. Dieser kann anhand der klassischen Kriterien anhand eines Punktesystems ermittelt werden. So werden für jedes Edge Device bei jedem Request für die Kriterien Punktzahlen ermittelt, die nach einer vorgegebenen Formel zu einer Gesamtpunktzahl, dem "Score", zusammengerechnet werden. Dieser Score dient einerseits dazu, den Request zu einem verfügbaren Edge Device zu leiten, wobei vorteilhafterweise das Edge Device mit dem höchsten Score den Request erhält. Andererseits liegt ein wesentlicher Aspekt der Erfindung darin, dass der den Edge Devices zugeordnete Score die Dymanik der Gruppe insofern bestimmt, als nach dem Score sowohl über das Ausscheiden von Edge Devices aus der Gruppe als auch über die Hereinnahme von Edge Devices in die Gruppe bestimmt wird.

Die Erfindung macht somit zunächst einen Schritt zurück und hält nicht länger Kopien eines jeden Contents zu jeder Zeit an verschiedenen festgelegten Edge Devices redundant vor. Statt dessen beschränkt sich die Verteilung des Content nun auf eine definierte aber fluktuierende Gruppe von Edge Devices, denen jeweils ein Score zugeordnet wird, über den einerseits die Verteilung der Requests innerhalb der Gruppe und andererseits die Größe der Gruppe festgelegt wird. So kann die Gruppe beispielsweise erweitert werden, wenn zu wenig Edge Devices mit einen festgelegten Mindest- Score in der Gruppe vorhanden sind.

Falls ein neues Edge Device in die Gruppe aufgenommen werden soll, ist es vorteilhaft, dasjenige zu wählen, das unter denen, die nicht Mitglied dieser Gruppe waren, in der Summe der Zugriffe der jüngsten Vergangenheit, beispielsweise in einem gewissen zurückliegenden Zeitabschnitt, nach den klassischen Kriterien das am besten geeignete gewesen wäre. Zu diesem Zwecke werden bei einem Request immer auch solche Edge Devices bewertet die momentan nicht zu der Gruppe gehören. Die Scores aller Requests des zurückliegenden Zeitabschnittes werden gesammelt und pro Content und Edge Device aufsummiert. Das Edge Device, welches für den fraglichen Content die höchste Score- Summe hat und nicht Mitglied der Gruppe ist, wird in die Gruppe aufgenommen.

Wenn das so ausgewählte Edge Device ein Cache ist, kann dieser sofort in die Gruppe aufgenommen werden, da er fähig ist, sich den Content "on the fly" zu besorgen. Handelt es sich jedoch um einen Server, muss er durch Übertragen einer Kopie des fraglichen Contents zuerst in die Lage versetzt werden, ihn zu liefern ("adaptive Contentverteilung").

Sinken die Zugriffszahlen auf einen bestimmten Content, werden Edge Devices aus der Gruppe entfernt. Dabei werden diejenigen gewählt, deren Score-Summe in einem zurückliegenden Zeitabschnitt für diesen Content am niedrigsten war. Dabei ist es mitunter vorteilhaft, die Kopie des Contents auf einem ehemals der Gruppe zugeordneten Server nicht sofort sondern erst dann zu löschen, wenn der Plattenplatz für Kopien anderen Contents benötigt wird. So ist es möglich, dass der Content dann noch vorhanden ist, wenn der Server erneut in die Gruppe aufgenommen werden soll. Das Vorhandensein des Contents kann auch als Auswahlkriterium für diesen Server dienen.

Der Score wird vorteilhafterweise in einer Art Tabelle, in der einem Edge Device eine Spalte zugeordnet ist, zusammen mit anderen Parametern geführt. Die Tabelle ist einem einer Vielzahl von Edge Devices zugeordneten und als Verteilerknoten dienenden "Meta"-Server zugänglich und wird vorteilhafterweise von diesem verwaltet. Wenn ein Edge Device aufgrund eines günstigen Scores ausgewählt und ihm die Kopie des Content übertragen wurde, kann diese Tatsache in Verbindung mit dem Edge Device in der Tabelle vermerkt werden. Die Scores werden anhand der eingehenden Parameter laufend aktualisiert. Die Scores können direkt am Verteilerknoten oder an anderer Stelle geführt werden. Die Auswahl des Edge Device, das eine Kopie erhalten soll oder das einen Request beantworten soll, wird vom Verteilerknoten nach dem aktuellen Wert des Scores getroffen. Dabei ist es zunächst unerheblich, nach welchem Kriterium ein Score ausgewählt wird. Sicherlich ist es besonders vorteilhaft, dem Edge Device mit dem momentan extremen, insbesondere mit dem höchsten, Score den Request zu übermitteln.

Da der einem Content und einem Edge Device zugeordnete Score laufend aktualisiert wird, können anhand des Scores bestimmte Maßnahmen eingeleitet werden. Als besonders wichtige Maßnahmen werden die Entscheidungen angesehen, weitere Kopien auf andere Edge Devices zu verteilen, wenn die Attraktivität des Content steigt, oder Kopien von Edge Devices zu löschen, wenn die Attraktivität sinkt. Auch durch einen lokalen Wechsel in der Attraktivität eines Contents können weitere Kopien zu entfernteren Edge Devices initiiert werden.

Dabei ist die erfindungsgemäße adaptive Contentverteilung zunächst unabhängig von der Art der Verteilung der Requests auf die Edge Devices. Allerdings ist es besonders vorteilhaft, sie in Verbindung mit einem Load Balancing Verfahren zu bringen, das sich der oben beschriebenen Redirection bedient. Dabei wird für die Verteilung der Requests auf den adaptiv verteilten Content ein als Redirector eingesetzter Server genutzt, dem jeder Request zugeleitet wird und der unter Zugrundelegung der Information über die tatsächliche aktuelle Verteilung des Content jeden Request an ein entsprechend geeignetes Edge Device vermittelt.

Die Kontrolle der Requests wird somit vom Redirector gesteuert, der steigende und/oder fallende Nachfragen registrieren und die entsprechenden Kopier- und/oder Löschvorgänge initiieren kann. Der Redirector behält dabei automatisch die Information darüber, auf welchem Edge Device welcher Content abgelegt ist. In dieser Ausführungsform wird der erfindungswesentliche Grundgedanke mit der Redirection gepaart, wobei vom Client zunächst die Redirektoren angesprochen werden, diese den Request dekodieren und den Client dann zu einem der Content-Server schicken. Auf dem Redirector werden entsprechend die Adressen der Inhalte verwaltet.

Ein Vorteil des erfindungsgemäßen Verfahrens ist, dass die Menge an Content, die ein bestimmtes Edge Device gleichzeitig liefern muss, stark minimiert werden kann. Das bedeutet im Umkehrschluss, dass die Anzahl der Edge Devices, die ein bestimmtes Stück Content liefern können müssen, verhältnismäßig klein ist. Somit können in einem erheblichen Maße Ressourcen eingespart werden, ohne dass es zu Überbelastungen und zum "Flattern" von Caches kommt. Für Anbieter von Content liegt ein Vorteil darin, dass er keine unnötig vorgehaltenen Ressourcen bezahlen muss, da der für seinen Content vorgesehene Plattenplatz immer aktuell angepasst wird. Erfindungsgemäße CDN bieten viel Spielraum dafür, für beide Seiten geeignete und bedarfsorientierte Bezahlungsmodi zu entwickeln.

Der wesentliche Vorteil des erfindungsgemäßen System resultiert letztendlich daraus, dass das System selber automatisch über die Contentverteilung entscheidet. So haben Erfahrungen gezeigt, dass sich Menge und regionale Verteilung der Zugriffe nur schwer vorhersagen lassen und Abweichungen um bis zu einem Faktor 1000 nach oben oder nach unten durchaus keine Seltenheit sind. Zudem kann sich die Nachfrage durch externe Ereignisse schlagartig um den gleichen Faktor ändern. Eine solche Dynamik kann von der Erfindung ausgeglichen werden.

Nachfolgend wird die Erfindung anhand eines Ausführungsbeispiels beschrieben:

Die "intelligente" Contentverteilung kann folgendermaßen geschehen: Zunächst wird ein bestimmtes Stück Content "statisch" nach Vorgabe auf einen oder mehrere Edge Devices verteilt. Das weitere Verfahren richtet sich dynamisch nach den Scores der Edge Devices, die dem Redirector in Form einer Tabelle zur Verfügung stehen. Erhält nun der Redirector einen Request auf einen Content, dann ermittelt er anhand seiner internen "Bestenliste" der Scores, welches Edge Device geeignet ist.

In der Liste ist zu jedem der Edge Devices die momentane Eignung, den nachfragenden Client zu bedienen, im Score, der als ganzzahliger Wert ausgebildet ist, kodiert. Dabei gilt: Je größer der Score, desto besser ist das Edge geeignet. Der Redirector ermittelt also auf den Request hin den Score für jedes ihm zugänglich Edge Device, also auch für diejenigen, die den Content momentan nicht gespeichert haben. Der Score wird aus verschiedenen Lastparametern und aus der Entfernung des Client im Netz zum Edge errechnet. Dazu werden die Lastparameter von den Edges zyklisch an den Redirector übermittelt werden. Die Entfernung zwischen Client und Edge ermittelt der Redirector selber. Aus den Informationen kann der Redirector den aktuellen Score ermitteln. Nachdem der Scores aller Edges ermittelt wurde, die den Content enthalten, wird das mit dem höchsten Score ausgewählt. Dorthin wird der Request verwiesen. Dieser Verweis entspricht der eigentlichen Redirection. Die Information über die Contentverteilung kann der Redirector einer Content Distribution Data Base (CDDB) entnehmen.

Wenn weniger als eine vorgegebene Mindestanzahl von Edges, die über den Content verfügen, über einem vorgegebenen Mindest-Score liegen, wird eine Replikation, also eine automatische Kopie, an einen oder mehrere andere Edges angefordert. Dazu kann In der CDDB für jedes Stück Content ein Score-Summen-Vektor geführt werden. Dieser enthält für jedes Edge Device die Summe aller in einer vorgebbaren zurückliegenden Zeitspanne von beispielsweise einer Stunde für Zugriffe auf dieses Stück Content ermittelten Scores. Wenn eine Replikation für einen Content angefordert wird, wird das Edge Device ausgesucht, das den Content (noch) nicht hat und den höchsten Wert im Score-Summen-Vektor bezüglich des Contents aufweist. Auf dieses Edge wird der Content kopiert. So kann dafür gesorgt werden, dass neue Kopien auf das Edge Device kommen, das in der zurückliegenden Stunde statistisch am geeignetesten gewesen wäre, die Requests zu bedienen.

Die vorteilhafte Ausführungsform der Erfindung lässt sich somit folgendermaßen zusammenfassen: Zunächst wird bei der Redirection des Requests berücksichtigt, welche Edge Devices den Content liefern können, welche Edge Devices verfügbar sind, wie belastet die Edge Devices im Hinblick auf verschiedene Parameter, wie Netzbandbreite, CPU-Last, Hauptspeicher und/oder Übertragungskapazität der Festplattencontroller, sind und wie weit der anfragende Client von den in Frage kommenden Edge Devices entfernt ist. Es wird auch ermittelt, ob die Erweiterung der Gruppe von Edge Devices mit Content sinnvoll ist. Ist das der Fall, wird aus den Edge Devices, die bislang keinen Content haben, dasjenige ausgewählt, das in der zurückliegenden Stunde das im Mittel am besten geeignete gewesen wäre. Umgekehrt kann die Gruppe mit dem Content beladener Devices auch verkleinert werden, indem das in der zurückliegenden Stunde im Mittel am wenigsten geeignete Edge Device entfernt wird.

## Patentansprüche

1. Verfahren zur Auslieferung, "Delivery", von digital kodierten Inhalten, "Content", beispielsweise von Texten, Bildern, Musikstücken, Videoclips oder Computerspielen, über das Internet, wobei Kopien des Content auf zentral über das Internet zugänglichen Computern, "Edge Devices", abgelegt werden und wobei ein Nutzer zum Abruf des Content über ein ebenfalls an das Internet angeschlossenes Endgerät auf ein Edge Device zugreift,
**dadurch gekennzeichnet,**
**dass** die mit Kopien eines speziellen Content versehenen Edge Devices zu einer Gruppe zusammengeschlossen sind, wobei die Zahl der zu der Gruppe gehörigen Edge Devices automatisch anhand eines einem jeden Edge Device zugeordneten Kontrollparameters an die Menge der diesen speziellen Content abrufenden Anfragen, "Requests", angepasst wird, wobei dieser spezielle Content mit steigender Nachfrage selbsttätig auf weitere Edge Devices verteilt wird und wobei Kopien dieses speziellen Content bei sinkender Nachfrage von den Edge Devices entfernt werden.

2. Verfahren nach Anspruch 1,
**dadurch gekennzeichnet, dass** der Kontrollparameter anhand eines Punktesystems ermittelt wird, wobei für jedes Edge Device bei einem Request eine Punktzahl ermittelt wird, wobei die Punktezahlen nach einer vorgegebenen Formel zu einer Gesamtpunktzahl, dem Rang oder "Score", zusammengerechnet werden.

3. Verfahren nach Anspruch 2,
**dadurch gekennzeichnet, dass** anhand des Score über das Ausscheiden von Edge Devices aus der Gruppe und über die Hereinnahme von Edge Devices in die Gruppe bestimmt wird.

4. Verfahren nach einem der vorherigen Ansprüche,
**dadurch gekennzeichnet, dass** dem Edge Device mit dem momentan extremalen, insbesondere mit dem höchsten, Score die Kopie übermittelt wird.

5. Verfahren nach einem der vorherigen Ansprüche,
**dadurch gekennzeichnet, dass** für die Hereinnahme eines Edge Device in die Gruppe dasjenige gewählt wird, das unter denen, die nicht Mitglied dieser Gruppe sind, in der Summe der Zugriffe der jüngsten Vergangenheit, insbesondere in einem gewissen zurückliegenden Zeitabschnitt, am besten geeignet ist.

6. Verfahren nach einem der vorherigen Ansprüche,
**dadurch gekennzeichnet, dass** das System einen bestimmten Content der Grundlage der Kontrollparameter selbsttätig auf weitere Edge Devices kopiert, sobald es eine steigende Nachfrage nach diesem Content registriert.

7. Verfahren nach einem der vorherigen Ansprüche,
**dadurch gekennzeichnet, dass**dasSystemeinenContent von Edge Devices entfernt, wenn es eine fallende Nachfrage registriert.

8. Verfahren nach Anspruch 7,
**dadurch gekennzeichnet, dass** die Kopie des Contents auf einem ehemals der Gruppe zugeordneten Server erst dann gelöscht wird, wenn der Plattenplatz für Kopien anderen Contents benötigt wird.

9. Verfahren nach einem der vorherigen Ansprüche,
**dadurch gekennzeichnet, dass** der Score zusammen mit anderen Parametern in einer einem Edge Device zugeordneten Tabelle geführt wird, wobei die Tabelle einem einer Vielzahl von Edge Devices zugeordneten und als Verteilerknoten dienenden "Meta"-Server zugänglich ist.

## Claims

1. A method for the delivery ("delivery") of digitally coded contents ("content"), for example texts, images, pieces of music, video clips or computer games, via the internet, wherein copies of the content are stored on computers centrally accessible via the internet ("edge devices"), and wherein a user accesses an edge device via a terminal also connected to the internet in order to retrieve the content,
**characterised in that**
the edge devices provided with copies of a specific content are combined into groups, wherein the number of the edge devices belonging to the group is automatically adapted to the number of requests ("requests") retrieving said specific content on the basis of a control parameter assigned to each edge device, wherein said specific content is automatically distributed to further edge devices in the case of increasing demand, and wherein copies of said specific content are removed from the edge devices in the case of decreasing demand.

2. The method according to claim 1,
**characterised in that** the control parameter is determined on the basis of a scoring system, wherein a number of points is determined for each edge device during a request, wherein a total number of points, called the place or "score", is calculated from the numbers of points according to a predetermined formula.

3. The method according to claim 2,
**characterised in that** the removing of edge devices from the group and the inclusion of edge devices into the group is decided on the basis of the score.

4. The method according to any one of the preceding claims,
**characterised in that** the copy is transmitted to the edge device with the currently extremal, in particular highest score.

5. The method according to any one of the preceding claims,
**characterised in that,** for the inclusion of an edge device into the group, the most suitable device in terms of the sum of accesses in the immediate past, particularly in a certain past time period, is selected from all the devices that are not members of the group.

6. The method according to any one of the preceding claims,
**characterised in that** the system automatically copies a certain content onto further edge devices based on the control parameters when it detects an increasing demand for this content.

7. The method according to any one of the preceding claims,
**characterised in that** the system removes the content from edge devices when it detects a decreasing demand.

8. The method according to claim 7,
**characterised in that** the copy of the content on a server previously assigned to the group is deleted only when the storage space is needed for copies of other content.

9. The method according to any one of the preceding claims,
**characterised in that** the score is kept in a table assigned to an edge device, together with other parameters, wherein the table can be accessed by a "meta" server assigned to a plurality of edge devices and serving as a distribution node.

## Revendications

1. Procédé de fourniture (« Delivery ») de contenus (« Content ») codés numériquement, tels que des textes, des images, des morceaux de musique, des clips vidéo ou des jeux vidéo, via l'internet, des copies du contenu étant stockées dans des ordinateurs (« Edge Devices ») accessibles de manière centrale via l'internet, et un utilisateur accédant à un Edge Device pour télécharger le contenu via un terminal également connecté à l'internet,
**caractérisé en ce que**
les Edge Devices comportant des copies d'un contenu spécial sont réunis en un groupe, le nombre des Edge Devices appartenant au groupe étant automatiquement adapté, à l'aide d'un paramètre de contrôle affecté à chaque Edge Device, à la quantité des requêtes (« Requests ») téléchargeant ledit contenu spécial, ledit contenu spécial étant automatiquement étendu à d'autres Edge Devices lorsque la demande augmente et des copies dudit contenu spécial étant supprimées lorsque la demande diminue.

2. Procédé selon la revendication 1,
**caractérisé en ce que** le paramètre de contrôle est déterminé à l'aide d'un système à points, un nombre de points étant déterminé pour chaque Edge Device dans le cas d'une requête, les nombres de points étant additionnés selon une formulé prédéterminée pour former un nombre de points total, le rang ou le « score ».

3. Procédé selon la revendication 2,
**caractérisé en ce que** le système détermine, à l'aide du score, si des Edge Devices doivent être supprimés du groupe ou si des Edge Devices doivent être introduits dans le groupe.

4. Procédé selon l'une des revendications précédentes,
**caractérisé en ce que** la copie est transmise au Edge Device avec le score momentanément extrêmal, notamment avec le score le plus fort.

5. Procédé selon l'une des revendications précédentes,
**caractérisé en ce que** pour introduire un Edge Device dans le groupe, on choisit celui qui parmi ceux qui ne font pas partie dudit groupe est le plus apte dans la somme des accès du passé le plus récent, notamment dans un intervalle de temps donné du passé le plus récent.

6. Procédé selon l'une des revendications précédentes,
**caractérisé en ce que** le système copie automatiquement, sur la base des paramètres de contrôle, un contenu donné sur d'autres Edge Devices dès qu'il enregistre une demande croissante pour ce contenu.

7. Procédé selon l'une des revendications précédentes,
**caractérisé en ce que** le système supprime un contenu du Edge Device lorsqu'il enregistre une demande décroissante.

8. Procédé selon la revendication 7,
**caractérisé en ce que** la copie du contenu n'est supprimée d'un serveur précédemment affecté au groupe que lorsque l'emplacement du disque doit laisser la place à des copies d'un autre contenu.

9. Procédé selon l'une des revendications précédentes,
**caractérisé en ce que** le score est stocké ensemble avec d'autres paramètres dans un tableau affecté à un Edge Device, le tableau étant accessible à un « métaserveur » affecté à une pluralité de Edge Devices et faisant fonction de noeud de distribution.
